# EUROPEAN PATENT APPLICATION

(11) **EP 4 443 799 A1**
(43) Date of publication of application: **09.10.2024**
(21) Application number: 22918334.8
(22) Date of filing: 08.12.2022
(51) Int. Cl.: H04L 5/00

(54) **METHOD AND APPARATUS FOR BEAM TRAINING IN SIDELINK**

(30) Priority: 10.01.2022 CN 202210022278; 14.01.2022 CN 202210045043
(71) Applicant: Huawei Technologies Co., Ltd., Shenzhen, Guangdong 518129 (CN)
(72) Inventor: JIAO, Ruicheng, Shenzhen, Guangdong 518129 (CN); HE, Hongli, Shenzhen, Guangdong 518129 (CN); LI, Xueru, Shenzhen, Guangdong 518129 (CN)
(74) Representative: Goddar, Heinz J.
(86) International application number: PCT/CN2022/137401
(87) International publication number: WO 2023/130884

(57) **Abstract**

This application provides a beam training method in sidelink and an apparatus, to implement collaboration between a first device and a second device in a beam training process. The method includes: A first device sends N pieces of first control information to a second device respectively in N time units. The first control information includes first indication information. The first indication information indicates a time interval between a time unit associated with the first control information and a time unit associated with a last piece of first control information. The first device receives a measurement result reported by the second device. The measurement result includes second indication information. The second indication information indicates identifiers of one or more reference signals in reference signals associated with M pieces of first control information. The N pieces of first control information include the M pieces of first control information. N is a positive integer, and M is a positive integer less than or equal to N.

## Description

This application claims priorities to patent application No. 202210022278.3, filed on January 10, 2022 and entitled "TRANSMISSION METHOD OF EXTENDED REALITY SERVICE AND APPARATUS", and to patent application No. 202210045043.6, filed on January 14, 2022 and entitled "BEAM TRAINING METHOD IN SIDELINK AND APPARATUS", both of which are incorporated herein by reference in their entireties.

### TECHNICAL FIELD

This application relates to the communication field, and more specifically, to a beam training method in sidelink and an apparatus.

### BACKGROUND

Sidelink (sidelink, SL) is a protocol designed for device-to-device (device-to-device, D2D) direct communication in 3GPP. In R16 release of new radio (new radio, NR), sidelink includes two main working modes, including a transmission mode 1 (transmission mode 1) and a transmission mode 2 (transmission mode 2). In the transmission mode 1, a network device needs to schedule a communication resource. In the transmission mode 2, the network device does not need to schedule the communication resource, and a terminal device may perform communication through resource sensing (sensing) and resource selection (selection). Currently, in an indoor commercial scenario, in consideration of a possible large penetration loss, the transmission mode 2 is used for SL communication.

Transmitter user equipment (transmitter user equipment, Tx UE) transmits a channel state information reference signal (channel state information reference signal, CSI-RS) through a physical sidelink shared channel (physical sidelink shared channel, PSSCH) for channel state information (channel state information, CSI) measurement. When sending an SL CSI-RS, the Tx UE indicates, in a CSI request (CSI request) field of sidelink control information 2 (sidelink control information 2, SCI 2), receiver user equipment (receiver user equipment, Rx UE) to measure CSI and report the CSI. After completing the CSI measurement, the Rx UE reports the measured CSI through the PSSCH.

In R18, enhancements of SL in millimeter wave frequency bands (frequency range 2, FR2) become one of the topics discussed. On the millimeter wave frequency bands, to overcome a high path loss, the Tx UE and/or the Rx UE need to communicate a signal via a directional beam. To determine an optimal beam pair between a transmitter and a receiver, beam training needs to be performed. In a cellular network, according to 802.11ad, for an initial beam connection in FR2, beam training is generally performed via a periodic reference signal, and the Rx UE may know when beam measurement ends. Currently, in an SL communication mode in the transmission mode 2, time-frequency resources used for beam training are obtained by the Tx UE through resource sensing/resource selection. This cannot ensure that the time-frequency resources used for beam training are periodic or equally spaced. Therefore, the Rx UE cannot know in advance start time and end time of beam sweeping of the Tx UE. There is no regular time for reporting a measurement result. This makes it difficult for the Tx UE and the Rx UE to coordinate in a beam training process.

### SUMMARY

This application provides a beam training method in sidelink and an apparatus, to implement collaboration between a first device and a second device in a beam training process.

According to a first aspect, a beam training method in sidelink is provided. The method may be performed by a terminal device, or a chip or a chip system on a terminal device side. The method includes: A first device sends N pieces of first control information to a second device respectively in N time units. The first control information includes first indication information. The first indication information indicates a time interval between a time unit associated with the first control information and a time unit associated with a last piece of first control information. N is a positive integer. The first device receives a measurement result reported by the second device. The measurement result includes second indication information. The second indication information indicates identifiers of one or more reference signals in reference signals associated with M pieces of first control information. The N pieces of first control information include the M pieces of first control information. M is a positive integer less than or equal to N.

Based on the foregoing solution, the first indication information in the first control information sent by the first device to the second device may indicate a time interval between a time unit at which the first control information is sent and a time unit at which the last piece of first control information is sent or a time unit at which a reference signal associated with the last piece of first control information is sent, or indicate a time interval between a time unit at which the reference signal associated with the first control information is sent and a time unit at which the last piece of first control information is sent or a time unit at which a reference signal associated with the last piece first control information is sent. The second device may determine, based on the time interval, time at which the first device finishes beam training. Therefore, this method can implement collaboration between the first device and the second device in a beam training process.

With reference to the first aspect, in some implementations of the first aspect, the reference signal associated with the first control information is a demodulation reference signal of the first control information, or the reference signal associated with the first control information is one or more reference signals scheduled via the first control information.

With reference to the first aspect, in some implementations of the first aspect, the second indication information indicates the identifiers of the one or more reference signals in the reference signals associated with the M pieces of first control information and reference signal received power of the one or more reference signals.

With reference to the first aspect, in some implementations of the first aspect, the first control information further includes third indication information. The third indication information indicates a time unit range within which the second device reports the measurement result. That the first device receives a measurement result reported by the second device includes: The first device receives, within the time unit range, the measurement result reported by the second device.

It should be understood that the first device sends, to the second device via the first control information, the time unit range indicating the second device to report the measurement result. This may avoid a case in which the second device does not report the measurement result for a long time or the reference signal received power measured by the second device expires. The first device may determine, based on whether the measurement result reported by the second device is received within the time unit range, whether beam training needs to be performed again.

With reference to the first aspect, in some implementations of the first aspect, before the first device receives, within the time unit range, the measurement result reported by the second device, the method further includes: The first device receives second control information within the time unit range. The second control information includes an identifier of a first spatial receiver filter. The identifier of the first spatial receiver filter is used by the first device to receive the measurement result by using the first spatial receiver filter. That the first device receives, within the time unit range, the measurement result reported by the second device includes: The first device receives, within the time unit range, the measurement result by using the first spatial receiver filter.

With reference to the first aspect, in some implementations of the first aspect, the identifier of the first spatial receiver filter is determined based on an identifier of a reference signal that is in the reference signals associated with the M pieces of first control information and that has reference signal received power greater than or equal to a preset threshold.

It should be understood that the second device sends the identifier of the first spatial receiver filter to the first device via the second control information. The first spatial receiver filter is a corresponding spatial receiver filter that is in different spatial receiver filters in the first device and that has reference signal received power greater than or equal to the preset threshold. In other words, the first spatial receiver filter is a spatial receiver filter with good transmission performance in the first device. The first device receives, by using the first spatial receiver filter, the measurement result sent by the second device. In this way, accuracy of receiving the measurement result by the first device can be improved.

With reference to the first aspect, in some implementations of the first aspect, the first control information further includes fourth indication information. The fourth indication information indicates a sequence number of a time unit, in the N time units, at which the first control information is sent.

With reference to the first aspect, in some implementations of the first aspect, the identifier of the reference signal is determined based on the time interval indicated by the first indication information in the first control information associated with the reference signal. Alternatively, the identifier of the reference signal is determined based on the time interval indicated by the first indication information in the first control information associated with the reference signal and a sequence number of a sub-time unit at which the reference signal is sent. Alternatively, the identifier of the reference signal is determined based on the sequence number indicated by the fourth indication information in the first control information associated with the reference signal. Alternatively, the identifier of the reference signal is determined based on the sequence number indicated by the fourth indication information in the first control information associated with the reference signal and a sequence number of a sub-time unit at which the reference signal is sent.

With reference to the first aspect, in some implementations of the first aspect, the first control information further includes sixth indication information. The sixth indication information indicates whether the one or more reference signals in the reference signals associated with the first control information are sent by using a same spatial transmitter filter.

It should be understood that if the sixth indication information indicates that the one or more reference signals in the reference signals associated with the first control information are sent by using the same spatial receiver filter, the identifier of the reference signal is determined based on the time interval indicated by the first indication information in the first control information associated with the reference signal, or the identifier of the reference signal is determined based on the sequence number indicated by the fourth indication information in the first control information associated with the reference signal. In this case, the second device may switch to a different spatial receiver filter to receive the one or more reference signals in the reference signals associated with the first control information.

If the sixth indication information indicates that the one or more reference signals in the reference signals associated with the first control information are sent by using different spatial receiver filters, the identifier of the reference signal is determined based on the time interval indicated by the first indication information in the first control information associated with the reference signal and the sequence number of the sub-time unit at which the reference signal is sent, or the identifier of the reference signal is determined based on the sequence number indicated by the fourth indication information in the first control information associated with the reference signal and the sequence number of the sub-time unit at which the reference signal is sent.

With reference to the first aspect, in some implementations of the first aspect, the measurement result may further include fifth indication information. The fifth indication information indicates a quantity of unused spatial receiver filters in the second device or indicates whether the second device uses all spatial receiver filters. The first device may determine, based on the fifth indication information in the measurement result, whether a next round of beam training needs to be performed.

With reference to the first aspect, in some implementations of the first aspect, the first control information further includes seventh indication information. The sixth indication information indicates that a time unit at which the first control information is sent is a time unit for beam training.

With reference to the first aspect, in some implementations of the first aspect, the second control information further includes eighth indication information. The seventh indication information indicates that a time unit at which the second control information is sent is a time unit for beam reporting.

According to a second aspect, a beam training method in sidelink is provided. The method may be performed by a terminal device, or a chip or a chip system on a terminal device side. The method includes: A second device receives N pieces of first control information from a first device respectively in N time units. The first control information includes first indication information. The first indication information indicates a time interval between a time unit associated with the first control information and a time unit associated with a last piece of first control information. N is a positive integer. The second device reports a measurement result to the first device. The measurement result includes second indication information. The second indication information indicates identifiers of one or more reference signals in reference signals associated with M pieces of first control information. M is a positive integer less than or equal to N.

Based on the foregoing technical solution, the first indication information in the first control information received by the second device from the first device may indicate a time interval between a time unit at which the first control information is sent and a time unit at which the last piece of first control information is sent or a time unit at which a reference signal scheduled via the last piece of first control information is sent, or indicate a time interval between a time unit at which the reference signal associated with the first control information is sent and a time unit at which the last piece of first control information is sent or a time unit at which a reference signal associated with the last piece first control information is sent. The second device may determine, based on the time interval, time at which beam training is finished. Therefore, this method can implement collaboration between the first device and the second device in a beam training process.

With reference to the second aspect, in some implementations of the second aspect, the reference signal associated with the first control information is a demodulation reference signal of the first control information, or the reference signal associated with the first control information is one or more reference signals scheduled via the first control information.

With reference to the second aspect, in some implementations of the second aspect, the second indication information indicates the identifiers of the one or more reference signals in the reference signals associated with the M pieces of first control information and reference signal received power of the one or more reference signals.

With reference to the second aspect, in some implementations of the second aspect, the first control information further includes third indication information. The third indication information indicates a time unit range within which the second device reports the measurement result. That the second device reports a measurement result to the first device includes: The second device reports the measurement result to the first device within the time unit range.

It should be understood that the second device reports the measurement result to the first device within the time unit range that is indicated by the third indication information and that is used for measurement result reporting. This may avoid a case in which the second device does not report the measurement result for a long time or the reference signal received power measured by the second device expires. The first device may alternatively determine, based on whether the measurement result reported by the second device is received within the time unit range, whether beam training needs to be performed again.

With reference to the second aspect, in some implementations of the second aspect, before the second device reports the measurement result to the first device within the time unit range, the method further includes: The second device sends second control information to the first device within the time unit range. The second control information includes an identifier of a first spatial receiver filter. The identifier of the first spatial receiver filter is used by the first device to receive the measurement result by using the first spatial receiver filter.

With reference to the second aspect, in some implementations of the second aspect, the identifier of the first spatial receiver filter is determined based on an identifier of a reference signal that is in the reference signals associated with the M pieces of first control information and that has reference signal received power greater than or equal to a preset threshold.

It should be understood that the second device sends the identifier of the first spatial receiver filter to the first device via the second control information. The first spatial receiver filter is a corresponding spatial receiver filter that is in different spatial receiver filters in the first device and that has reference signal received power greater than or equal to the preset threshold. In other words, the first spatial receiver filter is a spatial receiver filter with good transmission performance in the first device. The first device receives, by using the first spatial receiver filter, the measurement result sent by the second device. In this way, accuracy of receiving the measurement result by the first device can be improved.

With reference to the second aspect, in some implementations of the second aspect, the first control information further includes fourth indication information. The fourth indication information indicates a sequence number of a time unit, in the N time units, at which the first control information is sent.

With reference to the second aspect, in some implementations of the second aspect, the identifier of the reference signal is determined based on the time interval indicated by the first indication information in the first control information associated with the reference signal. Alternatively, the identifier of the reference signal is determined based on the time interval indicated by the first indication information in the first control information associated with the reference signal and a sequence number of a sub-time unit at which the reference signal is sent. Alternatively, the identifier of the reference signal is determined based on the sequence number indicated by the fourth indication information in the first control information associated with the reference signal. Alternatively, the identifier of the reference signal is determined based on the sequence number indicated by the fourth indication information in the first control information associated with the reference signal and a sequence number of a sub-time unit at which the reference signal is sent.

With reference to the second aspect, in some implementations of the second aspect, the first control information further includes sixth indication information. The sixth indication information indicates whether the one or more reference signals in the reference signals associated with the first control information are sent by using a same spatial transmitter filter.

It should be understood that if the sixth indication information indicates that the one or more reference signals in the reference signals associated with the first control information are sent by using the same spatial receiver filter, the identifier of the reference signal is determined based on the time interval indicated by the first indication information in the first control information associated with the reference signal, or the identifier of the reference signal is determined based on the sequence number indicated by the fourth indication information in the first control information associated with the reference signal. In this case, the second device may switch to a different spatial receiver filter to receive the one or more reference signals in the reference signals associated with the first control information.

If the sixth indication information indicates that the one or more reference signals in the reference signals associated with the first control information are sent by using different spatial receiver filters, the identifier of the reference signal is determined based on the time interval indicated by the first indication information in the first control information associated with the reference signal and the sequence number of the sub-time unit at which the reference signal is sent, or the identifier of the reference signal is determined based on the sequence number indicated by the fourth indication information in the first control information associated with the reference signal and the sequence number of the sub-time unit at which the reference signal is sent.

With reference to the second aspect, in some implementations of the second aspect, the measurement result further includes fifth indication information. The fifth indication information indicates a quantity of unused spatial receiver filters in the second device or indicates whether the second device uses all spatial receiver filters. The first device may determine, based on the fifth indication information in the measurement result, whether a next round of beam training needs to be performed.

With reference to the second aspect, in some implementations of the second aspect, the first control information further includes seventh indication information. The sixth indication information indicates that a time unit at which the first control information is sent is a time unit for beam training.

With reference to the second aspect, in some implementations of the second aspect, the second control information further includes eighth indication information. The seventh indication information indicates that a time unit at which the second control information is sent is a time unit for beam reporting.

According to a third aspect, a communication apparatus is provided. The apparatus may be used in the first device according to the first aspect. The apparatus includes a sending module, configured to send N pieces of first control information to a second device respectively in N time units, where the first control information includes first indication information, the first indication information indicates a time interval between a time unit associated with the first control information and a time unit associated with a last piece of first control information, and N is a positive integer; and a receiving module, configured to receive a measurement result reported by the second device. The measurement result includes second indication information. The second indication information indicates identifiers of one or more reference signals in reference signals associated with M pieces of first control information. The N pieces of first control information include the M pieces of first control information. M is a positive integer less than or equal to N.

With reference to the third aspect, in some implementations of the third aspect, the reference signal associated with the first control information is a demodulation reference signal of the first control information, or the reference signal associated with the first control information is one or more reference signals scheduled via the first control information.

With reference to the third aspect, in some implementations of the third aspect, the second indication information indicates the identifiers of the one or more reference signals in the reference signals associated with the M pieces of first control information and reference signal received power of the one or more reference signals.

With reference to the third aspect, in some implementations of the third aspect, the first control information further includes third indication information. The third indication information indicates a time unit range within which the second device reports the measurement result. The receiving module is specifically configured to receive, within the time unit range, the measurement result reported by the second device.

With reference to the third aspect, in some implementations of the third aspect, the receiving module is further configured to receive second control information within the time unit range. The second control information includes an identifier of a first spatial receiver filter. The identifier of the first spatial receiver filter is used by the receiving module to receive the measurement result by using the first spatial receiver filter. The receiving module is specifically configured to receive, within the time unit range, the measurement result by using the first spatial receiver filter.

With reference to the third aspect, in some implementations of the third aspect, the identifier of the first spatial receiver filter is determined based on an identifier of a reference signal that is in the reference signals associated with the M pieces of first control information and that has reference signal received power greater than or equal to a preset threshold.

With reference to the third aspect, in some implementations of the third aspect, the first control information further includes fourth indication information. The fourth indication information indicates a sequence number of a time unit, in the N time units, at which the first control information is sent.

With reference to the third aspect, in some implementations of the third aspect, the identifier of the reference signal is determined based on the time interval indicated by the first indication information in the first control information associated with the reference signal. Alternatively, the identifier of the reference signal is determined based on the time interval indicated by the first indication information in the first control information associated with the reference signal and a sequence number of a sub-time unit at which the reference signal is sent. Alternatively, the identifier of the reference signal is determined based on the sequence number indicated by the fourth indication information in the first control information associated with the reference signal. Alternatively, the identifier of the reference signal is determined based on the sequence number indicated by the fourth indication information in the first control information associated with the reference signal and a sequence number of a sub-time unit at which the reference signal is sent.

With reference to the third aspect, in some implementations of the third aspect, the first control information further includes sixth indication information. The sixth indication information indicates whether the one or more reference signals in the reference signals associated with the first control information are sent by using a same spatial transmitter filter.

With reference to the third aspect, in some implementations of the third aspect, the measurement result further includes fifth indication information. The fifth indication information indicates a quantity of unused spatial receiver filters in the second device.

According to a fourth aspect, a communication apparatus is provided. The apparatus may be used in the second device according to the second aspect. The apparatus includes: a receiving module, configured to receive N pieces of first control information from a first device in N time units, where the first control information includes first indication information, the first indication information indicates a time interval between a time unit associated with the first control information and a time unit associated with a last piece of first control information, and N is a positive integer; and a sending module, configured to report a measurement result to the first device. The measurement result includes second indication information. The second indication information indicates identifiers of one or more reference signals in reference signals associated with M pieces of first control information. M is a positive integer less than or equal to N.

With reference to the fourth aspect, in some implementations of the fourth aspect, the reference signal associated with the first control information is a demodulation reference signal of the first control information, or the reference signal associated with the first control information is one or more reference signals scheduled via the first control information.

With reference to the fourth aspect, in some implementations of the fourth aspect, the second indication information indicates the identifiers of the one or more reference signals in the reference signals associated with the M pieces of first control information and reference signal received power of the one or more reference signals.

With reference to the fourth aspect, in some implementations of the fourth aspect, the first control information further includes third indication information. The third indication information indicates a time unit range within which the sending module reports the measurement result. The sending module is specifically configured to report the measurement result to the first device within the time unit range.

With reference to the fourth aspect, in some implementations of the fourth aspect, the sending module is further configured to send second control information to the first device within the time unit range. The second control information includes an identifier of a first spatial receiver filter. The identifier of the first spatial receiver filter is used by the first device to receive the measurement result by using the first spatial receiver filter.

With reference to the fourth aspect, in some implementations of the fourth aspect, the identifier of the first spatial receiver filter is determined based on an identifier of a reference signal that is in the reference signals associated with the M pieces of first control information and that has reference signal received power greater than or equal to a preset threshold.

With reference to the fourth aspect, in some implementations of the fourth aspect, the first control information further includes fourth indication information. The fourth indication information indicates a sequence number of a time unit, in the N time units, at which the first control information is sent.

With reference to the fourth aspect, in some implementations of the fourth aspect, the identifier of the reference signal is determined based on the time interval indicated by the first indication information in the first control information associated with the reference signal. Alternatively, the identifier of the reference signal is determined based on the time interval indicated by the first indication information in the first control information associated with the reference signal and a sequence number of a sub-time unit at which the reference signal is sent. Alternatively, the identifier of the reference signal is determined based on the sequence number indicated by the fourth indication information in the first control information associated with the reference signal. Alternatively, the identifier of the reference signal is determined based on the sequence number indicated by the fourth indication information in the first control information associated with the reference signal and a sequence number of a sub-time unit at which the reference signal is sent.

With reference to the fourth aspect, in some implementations of the fourth aspect, the first control information further includes sixth indication information. The sixth indication information indicates whether the one or more reference signals in the reference signals associated with the first control information are sent by using a same spatial transmitter filter.

With reference to the fourth aspect, in some implementations of the fourth aspect, the measurement result further includes fifth indication information. The fifth indication information indicates a quantity of unused spatial receiver filters in the receiving module.

According to a fifth aspect, a communication device is provided. The communication device includes a processor and a memory. The memory is configured to store a computer program. The processor is configured to execute the computer program stored in the memory, to enable the communication device to perform the method according to any one of the first aspect or the possible implementations of the first aspect.

According to a sixth aspect, a communication device is provided. The communication device includes a processor and a memory. The memory is configured to store a computer program. The processor is configured to execute the computer program stored in the memory, to enable the communication device to perform the method according to any one of the second aspect or the possible implementations of the second aspect.

According to a seventh aspect, a communication apparatus is provided. The communication apparatus includes an input/output interface and a logic circuit. The input/output interface is configured to obtain input information and/or output information. The logic circuit is configured to perform the method according to any one of the foregoing aspects or the possible implementations of any one of the foregoing aspects, and perform processing and/or generate the output information based on the input information.

According to an eighth aspect, a communication system is provided. The communication system includes the first device, another communication device communicating with the first device, the second device, and another communication device communicating with the second device in the method according to the first aspect or the second aspect.

According to a ninth aspect, a computer-readable storage medium is provided. The computer-readable medium stores a computer program. When the computer program runs on a computer, the computer is enabled to perform the method according to any one of the first aspect and the possible implementations of the first aspect.

According to a tenth aspect, a computer-readable storage medium is provided. The computer-readable medium stores a computer program. When the computer program runs on a computer, the computer is enabled to perform the method according to any one of the second aspect and the possible implementations of the second aspect.

According to an eleventh aspect, a computer program product including instructions is provided. When the instructions are executed by a computer, a communication apparatus is enabled to implement the method according to any one of the first aspect and the possible implementations of the first aspect.

According to a twelfth aspect, a computer program product including instructions is provided. When the instructions are executed by a computer, a communication apparatus is enabled to implement the method according to any one of the second aspect and the possible implementations of the second aspect.

In the technical solutions provided in embodiments of this application, the first indication information in the first control information sent by the first device to the second device may indicate the time interval between the time unit at which the first control information is sent and the time unit at which the last piece of first control information is sent or the time unit at which the reference signal scheduled via the last piece of first control information is sent, or indicate the time interval between the time unit at which the reference signal associated with the first control information is sent and the time unit at which the last piece of first control information is sent or the time unit at which the reference signal associated with the last piece first control information is sent. The second device receives the first control information sent by the first device, and may determine, based on the time interval indicated by the first indication information in the first control information, time at which beam training is finished. Therefore, this method can implement collaboration between the first device and the second device in a beam training process.

### BRIEF DESCRIPTION OF DRAWINGS

FIG. 1 is a diagram of an architecture of a system to which an embodiment of this application is applicable;
FIG. 2 is a schematic interaction flowchart of a beam training method in sidelink according to an embodiment of this application;
FIG. 3 is a diagram of a time interval indicated by first indication information according to an embodiment of this application;
FIG. 4 is a diagram of a frame structure with which a first device sends first control information, an AGC signal, and a reference signal according to an embodiment of this application;
FIG. 5 is a diagram of beam measurement according to an embodiment of this application;
FIG. 6 is a diagram of measurement result reporting according to an embodiment of this application;
FIG. 7 is a diagram of another type of beam measurement according to an embodiment of this application;
FIG. 8 is a diagram of another type of measurement result reporting according to an embodiment of this application;
FIG. 9 is a diagram of another type of beam measurement and another type of measurement result reporting according to an embodiment of this application;
FIG. 10 is a schematic block diagram of a communication apparatus according to an embodiment of this application;
FIG. 11 is a schematic block diagram of another communication apparatus according to an embodiment of this application; and
FIG. 12 is a schematic block diagram of a communication device according to an embodiment of this application.

### DESCRIPTION OF EMBODIMENTS

The following describes technical solutions of this application with reference to accompanying drawings.

Embodiments of this application may be applied to various communication systems, for example, a long term evolution (long term evolution, LTE) system, an advanced long term evolution (advanced long term evolution, LTE-A) system, a universal mobile telecommunications system (universal mobile telecommunications system, UMTS), a cellular system related to the 3rd generation partnership project (3rd generation partnership project, 3GPP), a 5th generation (5th generation, 5G) mobile communication system, sidelink (sidelink, SL), a new communication system emerging in the future, or the like.

A communication system applicable to this application includes one or more transmitters and one or more receivers. Signal transmission between the transmitter and the receiver may be performed via a radio wave, or may be performed via a transmission medium, for example, visible light, a laser, infrared light, or an optical fiber. For example, both the transmitter and the receiver may be terminal devices.

The terminal device in an embodiment of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like. The user equipment includes vehicle user equipment.

For example, a network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission and reception point (transmission and reception point, TRP), or the like. Alternatively, the network device may be a gNB or a transmission point (for example, a TRP or a TP) in new radio (new radio, NR), or one antenna panel or a group of antenna panels (including a plurality of antenna panels) of a base station in NR. Alternatively, the network device may be a network node that constitutes a gNB or a transmission point, for example, a baseband unit (building baseband unit, BBU), a distributed unit (distributed unit, DU), or the like. Alternatively, the network device may be a vehicle-mounted device, a wearable device, a network device in a 5G network, a network device in a future evolved PLMN network, or the like. This is not limited.

The network device has abundant product forms. For example, in a product implementation process, the BBU and a radio frequency unit (radio frequency unit, RFU) may be integrated into a same device, and the device is connected to an antenna array via a cable (for example, the cable is but not limited to a feeder). The BBU and the RFU may alternatively be disposed separately, are connected via an optical fiber, and communicate with each other based on a protocol, including but not limited to, for example, a common public radio interface (common public radio interface, CPRI) protocol. In this case, the RFU is usually referred to as a remote radio unit (remote radio unit, RRU), and is connected to the antenna array via a cable. In addition, the RRU may alternatively be integrated with the antenna array. For example, this structure is used in an active antenna unit (active antenna unit, AAU) product in the current market.

In addition, the BBU may be further divided into a plurality of parts. For example, the BBU may be further divided into a central unit (central unit, CU) and a distributed unit (distributed unit, DU) based on real-time performance of a processed service. The CU is responsible for processing a non-real-time protocol and service, and the DU is responsible for processing a physical layer protocol and a real-time service. Further, some physical layer functions may be separated from the BBU or the DU and integrated into an AAU.

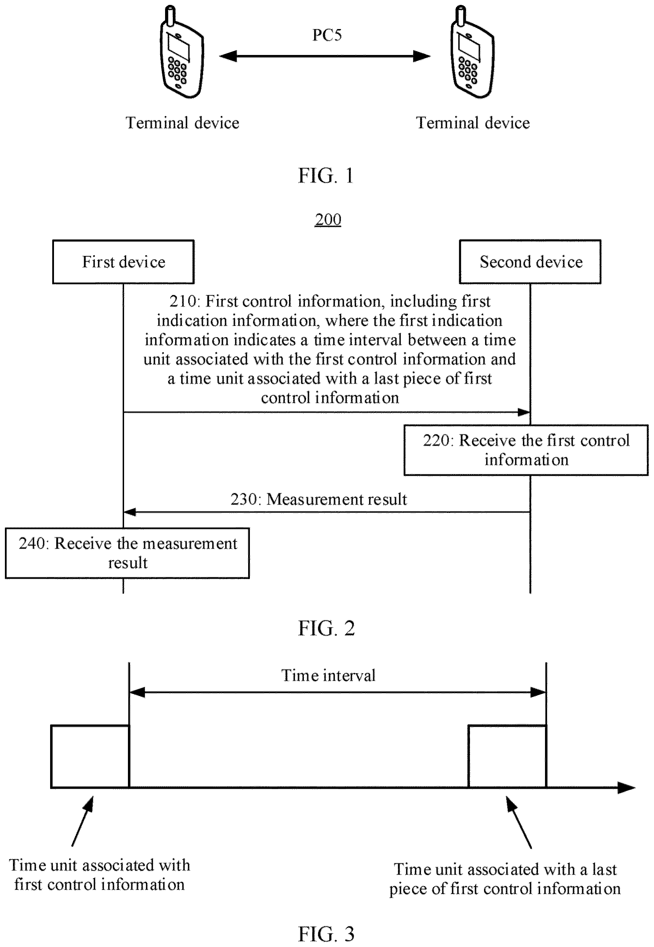

FIG. 1 is a diagram of a system architecture applicable to an embodiment of this application. The system includes a plurality of terminal devices. The terminal devices support communication via a direct communication interface (PC5), in other words, supporting sidelink transmission.

SL is a protocol designed for direct device-to-device (device-to-device, D2D) communication in 3GPP. In R16 release of NR, sidelink includes two main working modes, including a transmission mode 1 and a transmission mode 2. In the transmission mode 1, a network device needs to schedule a communication resource. In the transmission mode 2, the network device does not need to schedule the communication resource, and a terminal device/user may perform communication via resource sensing and resource selection. On the one hand, the transmission mode 2 can reduce costs of deploying the network device. On the other hand, the transmission mode 2 can be applied to an area with poor network signal coverage. Therefore, in an indoor commercial scenario concerned in an embodiment of this application, in consideration of a possible large penetration loss (penetration loss), the transmission mode 2 is used for sidelink communication.

Channels in NR SL mainly include a physical sidelink control channel (physical sidelink control channel, PSCCH), a physical sidelink shared channel (physical sidelink shared channel, PSSCH), and a physical sidelink feedback channel (physical sidelink feedback channel, PSFCH). The PSCCH is used for transmission of sidelink control information 1 (sidelink control information 1, SCI 1). The SCI 1 includes a modulation and coding scheme (modulation and coding scheme, MCS) of data transmitted through a PSSCH associated/scheduled via the SCI 1, a data priority, a time-frequency resource occupied by the PSSCH, and the like. The PSSCH is used for transmission of SCI 2 and data information. The channel further includes a series of reference signals such as a CSI-RS and a phase tracking reference signal (phase tracing reference signal, PT-RS). The PSFCH is used for transmission of feedback information of a hybrid automatic repeat request (hybrid automatic repeat request, HARQ) of data.

To obtain channel state information (channel state information, CSI) to better determine a parameter of Tx UE, for example, an MCS, power, or the like, the Tx UE transmits an SL CSI-RS through the PSSCH for CSI measurement. Currently, NR SL supports only unicast CSI-RS transmission. An SL CSI-RS pattern is based on a CSI-RS pattern of a cellular network in R15. A resource mapping manner of the SL CSI-RS pattern is consistent with that in R15. However, the SL CSI-RS pattern supports a maximum of two ports because a maximum of two streams of data are transmitted through the PSSCH in SL. Each physical resource block (physical resource blocks, PRBs) in the PSSCH communicates a same CSI-RS pattern, and the SL CSI-RS does not share a same symbol with a demodulation reference signal (demodulation reference signal, DMRS) in the PSCCH, SCI2, or PSSCH. When sending the SL CSI-RS, the Tx UE also indicates, in a CSI request (CSI request) field of the SCI 2, Rx UE to measure CSI and report the CSI. After completing the CSI measurement, the Rx UE reports the measured CSI through the PSSCH. In SL, measurement and reporting of CSI are generally aperiodic. This is different from the cellular network. To avoid CSI information expiration, the Rx UE reports the CSI within a longest latency. The longest latency is referred to as a latency bound. The latency bound is configured via a link interface PC5-radio resource control (radio resource control, RRC) between terminal devices, and is sent by the Tx UE to the Rx UE.

In R18, enhancements of SL in millimeter wave frequency bands (frequency range 2, FR2) become one of the topics discussed. On the millimeter wave frequency bands, to overcome a high path loss, the Tx UE and/or the Rx UE need to transmit a signal via a directional beam. To determine an optimal beam pair between a transmitter and a receiver, beam training needs to be performed. In an embodiment of this application, initial beam training before establishment of an RRC connection is mainly considered.

In a cellular network, according to 802. 11ad, for an initial beam connection in FR2, beam training is generally performed via a periodic reference signal. The following briefly describes performing initial beam training via a synchronization signal block (signal synchronization block, SSB) and performing initial beam training via a beacon (beacon).

### 1. Perform initial beam training via an SSB

In a cellular network, initial beam training is completed via an SSB. Each synchronization signal block is sent via one beam. SSBs in the cellular network have periodicity. A cycle of the SSBs is two frames (20 ms), and SSBs in one cycle are all in a same half frame. In addition, the SSB has a predefined transmission mode. This mode is determined based on an operating frequency band and a subcarrier spacing. Therefore, the Rx UE may determine, in the foregoing mode, positions, in the 20-ms cycle, at which beam quality is measured via the SSBs, and determine when the measurement ends.

In SL, not every Tx UE is used as a synchronization source to send an SSB. When the Tx UE does not send the SSB, the foregoing method cannot be used.

### 2. Perform initial beam training via a beacon.

According to 802.11ad, an access point (access point, AP) transmits a beacon in a beacon transmission interval (beacon transmission interval, BTI) of a beacon interval (beacon interval, BI), to configure network side information and train a transmit beam by the AP. Because the AP does not switch between transmitter antenna arrays in one BTI, a plurality of BTIs may be used to complete training of the transmit beam. In the beacon frame sent by the AP, a transmitter sector sweep span (transmitter sector sweep span, TXSS Span) field indicates a quantity of BIs in total that are needed for the AP to sweep all transmit beams. Because a BI cycle is generally 100 ms, a duration after which the AP finishes beam sweeping is calculated after the terminal device decodes the TXSS Span field.

In SL, slots of beam training are very likely to be aperiodic/non-consecutive. Therefore, a counting manner similar to the TXSS Span cannot be used to notify the Rx-UE of time at which beam training is finished.

Currently, in an SL communication mode in the transmission mode 2, time-frequency resources used for beam training are obtained by the Tx UE through resource sensing/resource selection. This cannot ensure that the time-frequency resources used for beam training are periodic or equally spaced. Therefore, the Rx UE cannot know in advance start time and end time of beam sweeping of the Tx UE. There is no regular time for reporting a measurement result. This makes it difficult for the Tx UE and the Rx UE to coordinate in a beam training process.

Based on this, an embodiment of this application provides a beam training method in sidelink, to implement collaboration between Tx UE and Rx UE in a beam training process. The method is applicable to an indoor commercial scenario in FR2. In this scenario, the Tx UE and the Rx UE for beam training have been synchronized through a synchronization source, but an RRC connection has not been established.

In an embodiment of this application, a first device may be the Tx UE, and a second device may be the Rx UE.

FIG. 2 is a schematic interaction flowchart of a beam training method 200 in sidelink according to an embodiment of this application.

210: A first device sends N pieces of first control information to a second device respectively in N time units. The N pieces of first control information one-to-one correspond to the N time units. The first control information includes first indication information. The first indication information indicates a time interval between a time unit associated with the first control information and a time unit associated with a last piece of first control information. The second device may know, based on the first indication information, a time unit at which beam training is finished. N is a positive integer. The first control information may be the SCI 1 and/or the SCI 2, and the time unit associated with the first control information is a time unit for beam training.

At least two of the N pieces of first control information are different. It may be understood that spatial transmitter filters associated with at least two of the N pieces of first control information are different, or DMRS ports associated with at least two of the N pieces of first control information are different.

The time unit associated with the first control information may be a time unit at which the first control information is sent, or may be a time unit at which a reference signal associated with the first control information is sent. The time unit associated with the last piece of first control information may be a time unit at which the last piece of first control information is sent, or may be a time unit at which a reference signal associated with the last piece of first control information is sent.

For example, the time interval between the time unit associated with the first control information and the time unit associated with the last piece of first control information may be a time interval between the time unit at which the first control information is sent and the time unit at which the last piece of first control information is sent, may alternatively be a time interval between the time unit at which the reference signal associated with the first control information is sent and the time unit at which the reference signal associated with the last piece of first control information is sent, or may alternatively be a time interval between the time unit at which the first control information is sent and the time unit at which the reference signal associated with the last piece of first control information is sent, or may be a time interval between the time unit at which the reference signal associated with the first control information is sent and the time unit at which the last piece of first control information is sent. This is not specifically limited in this application.

The time interval indicated by the first indication information may be a time interval between end time of the time unit associated with the first control information and end time of the time unit associated with the last piece of control information. The first indication information may be used to notify the second device of time at which beam training is finished. FIG. 3 is a diagram of a time interval indicated by first indication information according to an embodiment of this application. Optionally, the time interval indicated by the first indication information may be a time interval between end time of a time unit associated with first control information and end time of a time unit associated with a last piece of control information. Alternatively, the time interval indicated by the first indication information may be a time interval between start time of the time unit associated with the first control information and the end time of the time unit associated with the last piece of control information. Alternatively, the time interval indicated by the first indication information may be a time interval between the end time of the time unit associated with the first control information and start time of the time unit associated with the last piece of control information. This is not specifically limited in this application.

For example, the first control information further includes a demodulation reference signal of the first control information. Alternatively, the first control information further includes scheduling information of the reference signal. In other words, the reference signal used to measure the spatial transmitter filter in the first device may be sent via the first control information, or may be scheduled and sent via the first control information. Optionally, a time unit indicated by the scheduling information of the reference signal may be after the time unit at which the first control information is sent.

That a time unit indicated by the scheduling information of the reference signal is after the time unit at which the first control information is sent may be understood as that the first control information schedules the reference signal through a data channel across time units. It should be understood that after the first device sends the first control information, the second device performs blind detection on the first control information. After detecting the first control information, the second device switches to a spatial receiver filter, at the time unit indicated by the scheduling information that is of the reference signal and that is in the first control information, to separately receive the reference signal through the data channel. To reserve plenty of time for the second device to switch to the spatial receiver filter, including time for the second device to decode the first control information and to switch to the spatial receiver filter, the first control information in this application may be used to schedule the reference signal through the data channel across time units.

Optionally, the time unit at which the first control information is sent and the time unit at which the reference signal scheduled via the first control information is sent may be adjacent, or may be separated by one or more time units. This is specifically determined based on resource sensing and resource selection of the first device. Optionally, the time unit at which the first control information is sent may be the same time unit at which the reference signal scheduled via the first control information is sent.

The time unit may be one or more symbols, one or more slots (slots), one or more mini-slots (mini-slots), one or more subframes, one or more frames, or the like. The one or more time units may be consecutive or discrete in time.

220: The second device receives the N pieces of first control information from the first device in the N time units. The N time units one-to-one correspond to the N pieces of first control information. Specifically, the second device may receive, via a predefined spatial receiver filter, the first control information sent by the first device, or may receive, via a preconfigured spatial receiver filter, the first control information sent by the first device. The predefined spatial receiver filter is a spatial receiver filter that is default in the second device or selected by the second device. The preconfigured spatial receiver filter may be a spatial receiver filter determined through latest beam training.

If the first control information further includes demodulation reference information of the first control information, the second device measures the demodulation reference signal sent by the first device, to obtain information such as reference signal received power (reference signal received power, RSRP)/signal to interference noise ratio (signal to interference noise ratio, SINR)/received signal strength indicator (received signal strength indicator, RSSI) of the demodulation reference signal.

If the first control information further includes scheduling information of the reference signal, the first device sends one or more reference signals to the second device at a time unit indicated by the scheduling information that is of the reference signal and that is in the first control information. The one or more reference signals are used by the second device to measure the spatial transmitter filter in the first device. Correspondingly, the second device receives, at the time unit indicated by the scheduling information that is of the reference signal and that is in the first control information, the one or more reference signals sent by the first device.

Implementation 1: There is a time unit across the time unit at which the first control information is sent and the time unit at which the reference signal scheduled via the first control information is sent. In this case, the first device may use the same spatial transmitter filter or different spatial transmitter filters to send the one or more reference signals scheduled via the first control information. In this case, the first control information may further include sixth indication information. The sixth indication information indicates whether the one or more reference signals in the reference signals associated with the first control information are sent by using a same spatial transmitter filter.

If the sixth indication information in the first control information indicates that the one or more reference signals in the reference signals associated with the first control information are sent by using the same spatial transmitter filter, the second device switches to a spatial receiver filter, at the time unit indicated by the scheduling information that is of the reference signal and that is in the first control information, to receive the one or more reference signals sent by the first device.

Considering the first device switches to a spatial transmitter filter to send the one or more reference signals to the second device/the second device switches to the spatial receiver filter to receive the one or more reference signals sent by the first device, total energy of the signals received by the second device may change greatly. Therefore, the first device sends one or more automatic gain control (automatic gain control, AGC) signals before sending each reference signal. This may alleviate adverse impact of the large change in the total energy of the signals received by the second device on an analog-to-digital conversion.

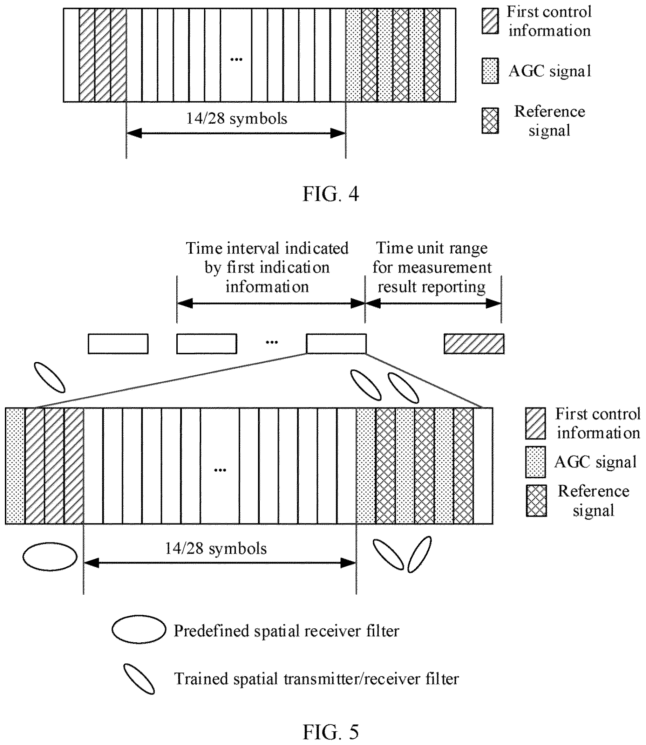

Optionally, the first device may send the AGC signal to the second device on at least one first symbol in the time unit indicated by the scheduling information that is of the reference signal and that is in the first control information. The first device sends, by using a spatial transmitter filter that sends the AGC signal, the reference signal to the second device on a second symbol in the time unit indicated by the scheduling information that is of the reference signal and that is in the first control information. The first symbol and the second symbol are consecutive symbols, and the first symbol is followed by the second symbol. FIG. 4 is a diagram of a frame structure with which a first device sends first control information, an AGC signal, and a reference signal according to an embodiment of this application.

The reference signal is sent by the first device a PSSCH. A time-domain resource of a PSSCH through which the reference signal is sent includes the time unit indicated by the scheduling information of the reference signal. For example, the reference signal may be a CSI-RS or a sidelink-synchronization signal block (sidelink-signal synchronization block, SL-SSB). The CSI-RS may be configured by a system or configured for a resource pool.

Specifically, if detecting, by using the predefined or preconfigured spatial receiver filter, the first control information sent by the first device, the second device detects, at the time unit indicated by the scheduling information that is of the reference signal and that is in the first control information, RSRP/SINR/RSSI of the one or more reference signals scheduled via the first control information.

Implementation 2: The time unit at which the first control information is sent is the same time unit at which the reference signal scheduled via the first control information is sent. In this case, because there is no plenty of time for the second device to demodulate the sixth indication information in the first control information to determine whether to switch to a different spatial receiver filter, it may be considered by default that different spatial transmitter filters are used to schedule a plurality of reference signals via the same piece of first control information. Correspondingly, the second device may receive, by using the same predefined/preconfigured spatial receiver filter at the time unit indicated by the scheduling information that is of the reference signal and that is in the first control information, the one or more reference signals scheduled via the first control information.

Implementation 3: The first control information includes a demodulation reference signal of the first control information. In this case, the first control information and the demodulation reference signal of the first control information are sent by using a same spatial transmitter filter. The first control information may be sent through the PSCCH, or may be sent through the PSSCH. For example, in a process in which the first device establishes an RRC connection to the second device, the first control information may be sent through RRC signaling, and together with an RRC connection request. Both the first control information and the RRC connection request are sent through the PSSCH. Correspondingly, the second device receives, by using the predefined or the preconfigured spatial receiver filter, the first control information sent by the first device, and measures the demodulation reference signal of the first control information. 230: The second device reports a measurement result to the first device. The measurement result includes second indication information. The second indication information indicates identifiers of one or more reference signals in reference signals associated with M pieces of first control information. The N pieces of first control information include the M pieces of first control information. M is a positive integer less than or equal to N. It should be understood that the second device may receive only some of the N pieces of first control information, or the second device may receive all the N pieces of first control information. All first control information received by the second device is referred to as the M pieces of first control information.

For example, the second indication information may indicate only an identifier of one of the reference signals associated with the M pieces of first control information. RSRP/SINR/RSSI of the reference signal is the largest. For another example, the second indication information may indicate identifiers of a plurality of reference signals in the reference signals associated with the M pieces of first control information. RSRPs/SINRs/RSSIs of the plurality of reference signals are greater than or equal to a threshold.

Optionally, the second indication information may alternatively indicate the identifiers of the one or more reference signals in the reference signals associated with the M pieces of first control information and RSRP/SINR/RSSI of each of the one or more reference signals. For example, the second indication information may indicate the identifiers of the reference signals associated with the M pieces of first control information and RSRP/SINR/RSSI of each of the reference signals associated with the M pieces of first control information, namely, identifiers of all reference signals measured by the second device and RSRP/SINR/RSSI of each of all the reference signals measured by the second device. This is not specifically limited in embodiments of this application.

For example, the reference signal associated with the first control information is a demodulation reference signal of the first control information. Alternatively, the reference signal associated with the first control information is one or more reference signals scheduled via the first control information. Sub-time units at which the one or more reference signals scheduled via the first control information are sent are different.

For example, the first control information further includes third indication information. The third indication information indicates a time unit range within which the second device reports the measurement result. The time unit range within which the measurement result is reported may be understood as a report window (report window). A start point of the time unit range may be a start point of a time unit at which an n^{th} piece of first control information in the N pieces of first control information is sent. n is a positive integer less than or equal to N. For example, the start point of the time unit range may alternatively be a start point of a time unit at which a first piece of first control information in the N pieces of first control information is sent. Optionally, the third indication information may alternatively indicate only a deadline for measurement result reporting by the second device. The deadline may be determined based on a system frame number and a slot number.

The first device sends, to the second device via the first control information, the time unit range indicating the second device to report the measurement result. This can avoid a case in which the second device does not report the measurement result for a long time or RSRP/SINR/RSSI measured by the second device expires.

Specifically, the second device reports the measurement result to the first device within the time unit range that is indicated by the third indication information and that is used for measurement result reporting.

In the implementation 1, before the second device reports the measurement result to the first device, the second device determines, through resource sensing and resource selection within the time unit range that is indicated by the third indication information and that is used for measurement result reporting, a time unit at which the measurement result is reported, and selects a spatial transmitter filter to send the second control information to the first device. The spatial transmitter filter may be a spatial transmitter filter corresponding to a reference signal with the largest RSRP/SINR/RSSI measured by the second device, or a predefined/preconfigured transmitter filter in the second device. The second control information includes an identifier of a first spatial receiver filter in the first device and scheduling information of the measurement result. The identifier of the first spatial receiver filter indicates the first device to receive, by using the first spatial receiver filter, the measurement result to be reported by the second device. The second control information may be the SCI 1 and/or the SCI 2, or may be sent through the PSSCH. It should be understood that for a filter in the first device or the second device, the spatial receiver filter and the spatial transmitter filter are a same filter.

For example, the first spatial receiver filter may be a spatial receiver filter sending a reference signal that is in the reference signals associated with the M pieces of first control information and that has reference signal received power greater than or equal to a preset threshold. For example, the first spatial receiver filter may be a spatial receiver filter sending a reference signal that is in the reference signals associated with the M pieces of first control information and that has largest reference signal received power. The preset threshold may be predefined, or may be determined by the second device, or may be determined by the first device and indicated by the first device to the second device. This is not specifically limited herein.

In the implementation 2 and the implementation 3, before the second device reports the measurement result to the first device, the second device determines, through resource sensing and resource selection within the time unit range that is indicated by the third indication information and that is used for measurement result reporting, a series of time units at which the measurement result is reported. At least one of the time units is within the time unit range that is indicated by the first device and that is used for measurement result reporting. The second device sends the second control information and the measurement result at the time unit by using a plurality of spatial transmitter filters. During scheduling in a same slot, there is no plenty of time for the first device to demodulate the identifier of the first spatial receiver filter included in the second control information. Therefore, in the implementations 2 and 3, the second control information no longer includes the identifier of the first spatial receiver filter. The first device receives, by using a same predefined/preconfigured spatial receiver filter, the second control information sent by the second device and the measurement result scheduled via the second control information.

240: The first device receives the measurement result reported by the second device. The measurement result includes second indication information. The second indication information indicates identifiers of one or more reference signals in reference signals associated with M pieces of first control information. Optionally, the second indication information may alternatively indicate the identifiers of the one or more reference signals in the reference signals associated with the M pieces of first control information and RSRP/SINR/RSSI of each of the one or more reference signals.

For example, the first control information may further include third indication information. The third indication information indicates a time unit range within which the second device reports the measurement result. Specifically, the first device receives, within the time unit range that is indicated by the third indication information and that is used for measurement result reporting, the measurement result reported by the second device.

Before the first device receives the measurement result reported by the second device, the first device may receive, within the time unit range for measurement result reporting, the second control information from the second device by using the predefined spatial receiver filter, or may receive the second control information from the second device by using the preconfigured spatial receiver filter. The predefined spatial receiver filter is a spatial receiver filter that is default in the first device or selected by the first device. The preconfigured spatial receiver filter may be a spatial receiver filter determined through latest beam training.

If the first device receives the second control information, and the second control information includes an identifier of a first spatial receiver filter in the first device and scheduling information of the measurement result, the first device receives, by using the first spatial receiver filter within the time unit indicated by the scheduling information that is of the measurement result and that is in the second control information, the measurement result reported by the second device.

It should be understood that the second device sends, to the first device via the second control information, an identifier of the first spatial receiver filter that indicates the first device to receive, by using the first spatial receiver filter, the measurement result reported by the second device. The identifier of the first spatial receiver filter is determined based on an identifier of a reference signal that is in the reference signals associated with the M pieces of first control information and that has reference signal received power greater than or equal to a preset threshold. The first spatial receiver filter is a spatial receiver filter with good transmission performance in the first device. The first device receives, by using the first spatial receiver filter, the measurement result sent by the second device. In this way, accuracy of receiving the measurement result by the first device can be improved.

For example, the first control information may further include fourth indication information. The fourth indication information indicates a sequence number of a time unit, in the N time units, at which the first control information is sent. In other words, the fourth indication information indicates a sequence order, in the current round of beam training, of the time unit at which the first control information is sent. For example, a value of the sequence number may be 0 to N-1 or 1 to N in a forward order, or may be N-1 to 0 or N to 1 in a backward order.

Optionally, the identifier of the reference signal is determined based on the time interval indicated by the first indication information in the first control information associated with the reference signal. Alternatively, the identifier of the reference signal is determined based on the sequence number indicated by the fourth indication information in the first control information associated with the reference signal. Alternatively, the identifier of the reference signal is determined based on the time interval indicated by the first indication information in the first control information associated with the reference signal and a sequence number of a sub-time unit at which the reference signal is sent. Alternatively, the identifier of the reference signal is determined based on the sequence number indicated by the fourth indication information in the first control information associated with the reference signal and a sequence number of a sub-time unit at which the reference signal is sent. It should be understood that the time interval indicated by the first indication information one-to-one corresponds to the sequence number indicated by the fourth indication information. One or more reference signals may be scheduled via one piece of first control information. Each reference signal is sent at one sub-time unit of the time unit associated with the first control information. For example, when the time unit is a slot, the sub-time unit may be a symbol.

The first control information may further include sixth indication information. The sixth indication information indicates whether the one or more reference signals in the reference signals associated with the first control information are sent by using a same spatial transmitter filter.

In the implementation 1, if the sixth indication information in the first control information indicates that the one or more reference signals in the reference signals associated with the first control information are sent by using the same spatial receiver filter, the identifier of the reference signal is determined based on the time interval indicated by the first indication information in the first control information associated with the reference signal, or the identifier of the reference signal is determined based on the sequence number indicated by the fourth indication information in the first control information associated with the reference signal. In this case, the second device may switch to a different spatial receiver filter to receive the one or more reference signals in the reference signals associated with the first control information.

If the sixth indication information in the first control information indicates that the one or more reference signals in the reference signals associated with the first control information are sent by using different spatial receiver filters, the identifier of the reference signal is determined based on the time interval indicated by the first indication information in the first control information associated with the reference signal and the sequence number of the sub-time unit at which the reference signal is sent, or the identifier of the reference signal is determined based on the sequence number indicated by the fourth indication information in the first control information associated with the reference signal and the sequence number of the sub-time unit at which the reference signal is sent.

In the implementation 2, because the plurality of reference signals scheduled via the first control information are sent by different spatial transmitter filters, the identifier of the reference signal is determined based on the time interval indicated by the first indication information in the first control information associated with the reference signal and the sequence number of the sub-time unit at which the reference signal is sent, or the identifier of the reference signal is determined based on the sequence number indicated by the fourth indication information in the first control information associated with the reference signal and the sequence number of the sub-time unit at which the reference signal is sent.

In the implementation 3, the identifier of the reference signal may be determined based on the time interval indicated by the first indication information in the first control information associated with the reference signal, or the identifier of the reference signal may be determined based on the sequence number indicated by the fourth indication information in the first control information associated with the reference signal.

The first device may determine, based on the identifier of the reference signal, the spatial transmitter filter for sending the reference signal. Therefore, after receiving the measurement result reported by the second device, the first device may determine, based on the identifier of the reference signal in the measurement result, the spatial transmitter filter with good transmission performance in the first device. The first device may alternatively determine RSRP/SINRs/RSSIs respectively corresponding to different spatial transmitter filters in the first device, based on the identifiers of the one or more reference signals in the reference signals associated with the M pieces of first control information in the measurement result and RSRP/SINRs/RSSIs of the one or more reference signals.

A specific example of the identifier of the first spatial receiver filter included in the second control information is used. For example, the second device may add a new transmission configuration indicator (transmission configuration indicator, TCI) field to the second control information, so that a value of the TCI field may be a time interval indicated by first indication information in a piece of first control information.

Because time units for beam training may be aperiodic/non-consecutive, and a value range of the time interval indicated by the first indication information may be greater than the sequence number indicated by the fourth indication information, reporting overheads in the time interval indicated by the first indication information are large. In this case, the second device may indicate, by sending the sequence number indicated by the fourth indication information, the identifier of the first spatial receiver filter used by the first device to receive the measurement result. This can reduce the overheads. For example, a value of the TCI field may be a sequence number indicated by fourth indication information in a piece of first control information.

Because the reference signal in a beam training slot is preconfigured in each resource pool, a quantity of reference signals sent by the first device by using each spatial transmitter filter does not necessarily and completely match a quantity of spatial receiver filters in the second device. For example, the quantity of the reference signals sent by the first device by using each spatial transmitter filter may be less than the quantity of spatial receiver filters in the second device. Therefore, the second device may notify, via the measurement result, the first device whether the second device finishes sweeping the spatial receiver filter, to trigger the first device to perform a next round of beam training.

For example, the measurement result further includes fifth indication information. The fifth indication information indicates a quantity of unused spatial receiver filters in the second device or indicates whether the second device uses all spatial receiver filters. For example, if the second device uses all spatial receiver filters, the fifth indication information may indicate that the second device uses all spatial receiver filters.

The fifth indication information may give an indication via one bit. For example, "1" indicates that a quantity of spatial receiver filters that are not used by the second device is greater than 0, and "0" indicates that the second device uses all spatial receiver filters. Alternatively, "0" indicates that a quantity of spatial receiver filters that are not used by the second device is greater than 0, and "1" indicates that the second device uses all spatial receiver filters. This is not specifically limited in this application.

Correspondingly, the first device may determine, based on the fifth indication information in the measurement result, whether a next round of beam training needs to be performed. If the fifth indication information indicates that the quantity of spatial receiver filters that are in the second device and that do not perform measurement is greater than or equal to 1, or the fifth indication information indicates that some spatial receiver filters in the second device are not used, the first device determines to perform the next round of beam training.

Optionally, if the first device fails to receive, within the time unit range for measurement result reporting, the measurement result reported by the second device, it is considered that this round of beam training fails. The first device continues to perform resource sensing and resource selection, to perform a next round of beam training.

Optionally, the first control information may further include seventh indication information. The seventh indication information indicates that a time unit at which the first control information is sent is a time unit for beam training. Therefore, if detecting the first control information, the second device learns that a current time unit is a time unit for beam training, and determines, based on a time interval that is indicated by the first indication information and that is between the time unit associated with the first control information and the time unit associated with the last piece of first control information, a time unit at which beam training is finished.

Optionally, the second control information may further include eighth indication information. The eighth indication information indicates that a time unit at which the second control information is sent is a time unit for beam reporting. Therefore, if detecting the second control information, the first device learns that a current time unit is a time unit for beam reporting.

In the technical solutions provided in embodiments of this application, the first indication information in the first control information sent by the first device to the second device may indicate the time interval between the time unit at which the first control information is sent and the time unit at which the last piece of first control information is sent or the time unit at which the reference signal scheduled via the last piece of first control information is sent, or indicate the time interval between the time unit at which the reference signal associated with the first control information is sent and the time unit at which the last piece of first control information is sent or the time unit at which the reference signal associated with the last piece first control information is sent. The second device receives the first control information sent by the first device, and may determine, based on the time interval indicated by the first indication information in the first control information, time at which beam training is finished. Therefore, this method can implement collaboration between the first device and the second device in a beam training process.

FIG. 5 is a diagram of beam measurement according to an embodiment of this application, and is applicable to the implementation 1. For example, a time unit is a slot, and a sub-time unit is a symbol. A first device sends both first control information and a reference signal associated with the first control information to a second device by using a trained spatial transmitter filter. The second device receives, by using a predefined spatial transmitter filter, the first control information sent by the first device. The second device receives, by using a trained spatial receiver filter, the reference signal that is associated with the first control information and that is sent by the first device. The spatial transmitter filter may be understood as a transmit beam, and the spatial receiver filter may be understood as a receive beam.

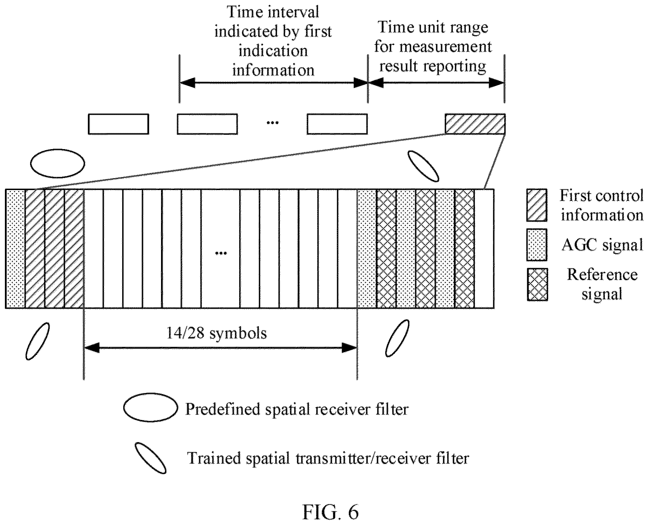

FIG. 6 is a diagram of measurement result reporting according to an embodiment of this application, and is applicable to the implementation 1. For example, a time unit is a slot, and a sub-time unit is a symbol. A second device sends both second control information and a measurement result to a first device by using a trained spatial transmitter filter. The first device receives, by using a predefined spatial transmitter filter, the second control information sent by the second device. The first device may receive, by using a spatial receiver filter indicated by the second control information or a spatial receiver filter predefined by the second device, the measurement result sent by the second device.

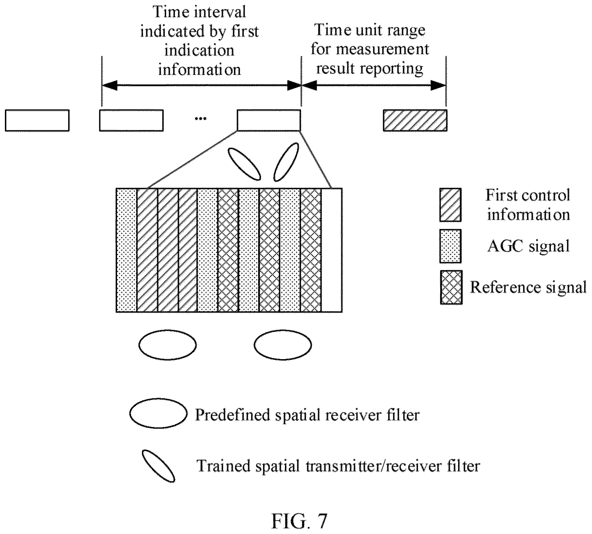

FIG. 7 is a diagram of another type of beam measurement according to an embodiment of this application, and is applicable to the implementation 2. For example, a time unit is a slot, and a sub-time unit is a symbol. A first device sends both first control information and a reference signal associated with the first control information to a second device by using a trained spatial transmitter filter. The second device receives, by using a predefined spatial transmitter filter, the first control information and the reference signal associated with the first control information that are sent by the first device.

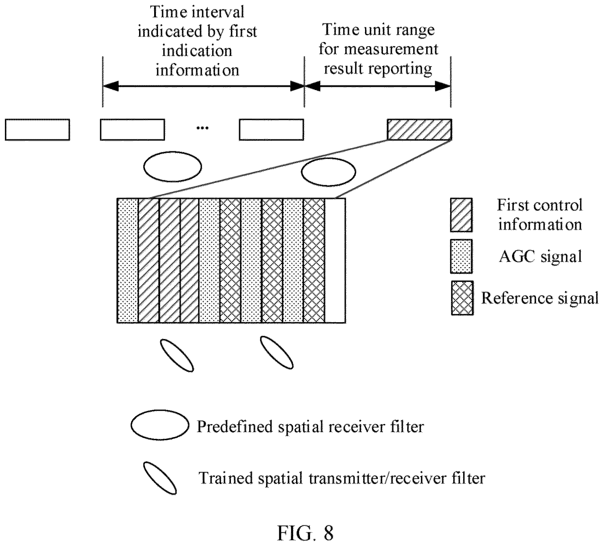

FIG. 8 is a diagram of another type of measurement result reporting according to an embodiment of this application, and is applicable to the implementation 2. For example, a time unit is a slot, and a sub-time unit is a symbol. A second device sends both second control information and a measurement result to a first device by using a trained spatial transmitter filter. The first device receives, by using a predefined spatial transmitter filter, the second control information and the measurement result that are sent by the second device.

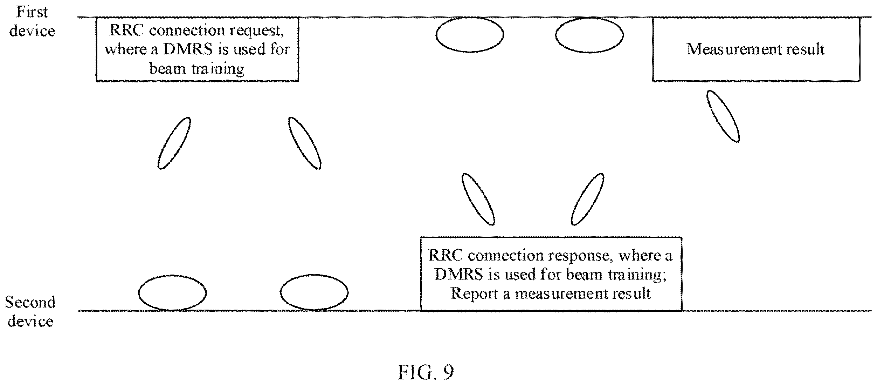

FIG. 9 is a diagram of another type of beam measurement and another type of measurement result reporting according to an embodiment of this application, and is applicable to the implementation 3. A first device sends both first control information and a reference signal associated with the first control information to a second device by using a trained spatial transmitter filter. The second device receives, by using a predefined spatial transmitter filter, the first control information and the reference signal associated with the first control information that are sent by the first device.

The second device sends both second control information and a measurement result to the first device by using a trained spatial transmitter filter. The first device receives, by using a predefined spatial transmitter filter, the second control information sent by the second device. The first device receives, by using a trained spatial receiver filter, the measurement result sent by the second device.

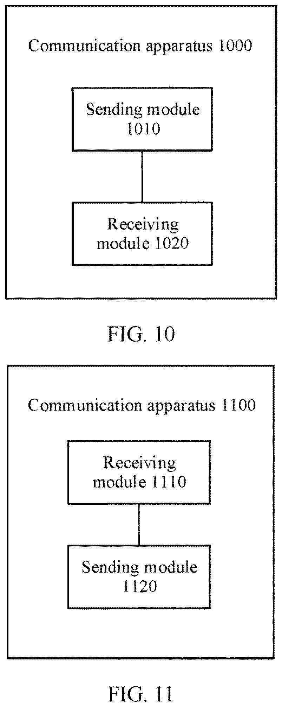

An embodiment of this application provides a communication apparatus. FIG. 10 is a schematic block diagram of a communication apparatus 1000 according to an embodiment of this application. The apparatus may be used in the first device in an embodiment of this application. The communication apparatus 1000 includes:
a sending module 1010, configured to send N pieces of first control information to a second device respectively in N time units, where the first control information includes first indication information, the first indication information indicates a time interval between a time unit associated with the first control information and a time unit associated with a last piece of first control information, and N is a positive integer; and
a receiving module 1020, configured to receive a measurement result reported by the second device. The measurement result includes second indication information. The second indication information indicates identifiers of one or more reference signals in reference signals associated with M pieces of first control information. The N pieces of first control information include the M pieces of first control information. M is a positive integer less than or equal to N.

Optionally, the reference signal associated with the first control information is a demodulation reference signal of the first control information, or the reference signal associated with the first control information is one or more reference signals scheduled via the first control information.

Optionally, the second indication information indicates the identifiers of the one or more reference signals in the reference signals associated with the M pieces of first control information and reference signal received power of the one or more reference signals.

Optionally, the first control information further includes third indication information. The third indication information indicates a time unit range within which the second device reports the measurement result.

The receiving module 1020 is specifically configured to receive, within the time unit range, the measurement result reported by the second device.

Optionally, the receiving module 1020 is further configured to receive second control information within the time unit range. The second control information includes an identifier of a first spatial receiver filter. The identifier of the first spatial receiver filter is used by the receiving module to receive the measurement result by using the first spatial receiver filter.

The receiving module 1020 is specifically configured to receive, within the time unit range, the measurement result by using the first spatial receiver filter.

Optionally, the identifier of the first spatial receiver filter is determined based on an identifier of a reference signal that is in the reference signals associated with the M pieces of first control information and that has reference signal received power greater than or equal to a preset threshold.

Optionally, the first control information further includes fourth indication information. The fourth indication information indicates a sequence number of a time unit, in the N time units, at which the first control information is sent.

Optionally, the identifier of the reference signal is determined based on the time interval indicated by the first indication information in the first control information associated with the reference signal.

Alternatively, the identifier of the reference signal is determined based on the time interval indicated by the first indication information in the first control information associated with the reference signal and a sequence number of a sub-time unit at which the reference signal is sent.

Alternatively, the identifier of the reference signal is determined based on the sequence number indicated by the fourth indication information in the first control information associated with the reference signal.

Alternatively, the identifier of the reference signal is determined based on the sequence number indicated by the fourth indication information in the first control information associated with the reference signal and a sequence number of a sub-time unit at which the reference signal is sent.

Optionally, the first control information further includes sixth indication information. The sixth indication information indicates whether the one or more reference signals in the reference signals associated with the first control information are sent by using a same spatial transmitter filter.

Optionally, the measurement result further includes fifth indication information. The fifth indication information indicates a quantity of unused spatial receiver filters in the second device. An embodiment of this application provides a communication apparatus. FIG. 11 is a schematic block diagram of a communication apparatus 1100 according to an embodiment of this application. The apparatus may be used in the second device in an embodiment of this application. The communication apparatus 1100 includes:
a receiving module 1110, configured to receive N pieces of first control information from a first device in N time units, where the first control information includes first indication information, the first indication information indicates a time interval between a time unit associated with the first control information and a time unit associated with a last piece of first control information, and N is a positive integer; and
a sending module 1120, configured to report a measurement result to the first device. The measurement result includes second indication information. The second indication information indicates identifiers of one or more reference signals in reference signals associated with M pieces of first control information. M is a positive integer less than or equal to N.

Optionally, the reference signal associated with the first control information is a demodulation reference signal of the first control information, or the reference signal associated with the first control information is one or more reference signals scheduled via the first control information.

Optionally, the second indication information indicates the identifiers of the one or more reference signals in the reference signals associated with the M pieces of first control information and reference signal received power of the one or more reference signals.

Optionally, the first control information further includes third indication information. The third indication information indicates a time unit range within which the sending module reports the measurement result.

The sending module 1120 is specifically configured to report the measurement result to the first device within the time unit range.

Optionally, the sending module 1120 is further configured to send second control information to the first device within the time unit range. The second control information includes an identifier of a first spatial receiver filter. The identifier of the first spatial receiver filter is used by the first device to receive the measurement result by using the first spatial receiver filter.

Optionally, the identifier of the first spatial receiver filter is determined based on an identifier of a reference signal that is in the reference signals associated with the M pieces of first control information and that has reference signal received power greater than or equal to a preset threshold.

Optionally, the first control information further includes fourth indication information. The fourth indication information indicates a sequence number of a time unit, in the N time units, at which the first control information is sent.

Optionally, the identifier of the reference signal is determined based on the time interval indicated by the first indication information in the first control information associated with the reference signal.

Alternatively, the identifier of the reference signal is determined based on the time interval indicated by the first indication information in the first control information associated with the reference signal and a sequence number of a sub-time unit at which the reference signal is sent.

Alternatively, the identifier of the reference signal is determined based on the sequence number indicated by the fourth indication information in the first control information associated with the reference signal.

Alternatively, the identifier of the reference signal is determined based on the sequence number indicated by the fourth indication information in the first control information associated with the reference signal and a sequence number of a sub-time unit at which the reference signal is sent.

Optionally, the first control information further includes sixth indication information.

The sixth indication information indicates whether the one or more reference signals in the reference signals associated with the first control information are sent by using a same spatial transmitter filter.

Optionally, the measurement result further includes fifth indication information. The fifth indication information indicates a quantity of unused spatial receiver filters in the receiving module.

Embodiment 1: A communication apparatus is provided. The communication apparatus includes a sending module, configured to send N pieces of first control information to a second device respectively in N time units, where the first control information includes first indication information, the first indication information indicates a time interval between a time unit associated with the first control information and a time unit associated with a last piece of first control information, and N is a positive integer; and
a receiving module, configured to receive a measurement result reported by the second device. The measurement result includes second indication information. The second indication information indicates identifiers of one or more reference signals in reference signals associated with M pieces of first control information. The N pieces of first control information include the M pieces of first control information. M is a positive integer less than or equal to N.

Embodiment 2: According to the embodiment 1, the reference signal associated with the first control information is a demodulation reference signal of the first control information, or the reference signal associated with the first control information is one or more reference signals scheduled via the first control information.

Embodiment 3: According to the embodiment 1 or the embodiment 2, the second indication information indicates the identifiers of the one or more reference signals in the reference signals associated with the M pieces of first control information and reference signal received power of the one or more reference signals.

Embodiment 4: According to any one of the embodiments 1 to 3, the first control information further includes third indication information. The third indication information indicates a time unit range within which the second device reports the measurement result.

The receiving module is specifically configured to receive, within the time unit range, the measurement result reported by the second device.

Embodiment 5: According to the embodiment 4, the receiving module is further configured to receive second control information within the time unit range. The second control information includes an identifier of a first spatial receiver filter. The identifier of the first spatial receiver filter is used by the receiving module to receive the measurement result by using the first spatial receiver filter.

The receiving module is specifically configured to receive, within the time unit range, the measurement result by using the first spatial receiver filter.

Embodiment 6: According to the embodiment 5, the identifier of the first spatial receiver filter is determined based on an identifier of a reference signal that is in the reference signals associated with the M pieces of first control information and that has reference signal received power greater than or equal to a preset threshold.

Embodiment 7: According to any one of the embodiments 1 to 6, the first control information further includes fourth indication information. The fourth indication information indicates a sequence number of a time unit, in the N time units, at which the first control information is sent.

Embodiment 8: According to any one of the embodiments 1 to 7, the identifier of the reference signal is determined based on the time interval indicated by the first indication information in the first control information associated with the reference signal.

Alternatively, the identifier of the reference signal is determined based on the time interval indicated by the first indication information in the first control information associated with the reference signal and a sequence number of a sub-time unit at which the reference signal is sent.

Alternatively, the identifier of the reference signal is determined based on the sequence number indicated by the fourth indication information in the first control information associated with the reference signal.

Alternatively, the identifier of the reference signal is determined based on the sequence number indicated by the fourth indication information in the first control information associated with the reference signal and a sequence number of a sub-time unit at which the reference signal is sent.

Embodiment 9: According to any one of the embodiments 1 to 8, the measurement result further includes fifth indication information. The fifth indication information indicates a quantity of unused spatial receiver filters in the second device.

Embodiment 10: According to any one of the embodiments 1 to 9, the first control information further includes sixth indication information. The sixth indication information indicates whether the one or more reference signals in the reference signals associated with the first control information are sent by using a same spatial transmitter filter.

Embodiment 1: Another communication apparatus is provided. The communication apparatus includes: a receiving module, configured to receive N pieces of first control information from a first device in N time units, where the first control information includes first indication information, the first indication information indicates a time interval between a time unit associated with the first control information and a time unit associated with a last piece of first control information, and N is a positive integer; and
a sending module, configured to report a measurement result to the first device. The measurement result includes second indication information. The second indication information indicates identifiers of one or more reference signals in reference signals associated with M pieces of first control information. M is a positive integer less than or equal to N.

Embodiment 2: According to the embodiment 1, the reference signal associated with the first control information is a demodulation reference signal of the first control information, or the reference signal associated with the first control information is one or more reference signals scheduled via the first control information.

Embodiment 3: According to the embodiment 1 or the embodiment 2, the second indication information indicates the identifiers of the one or more reference signals in the reference signals associated with the M pieces of first control information and reference signal received power of the one or more reference signals.

Embodiment 4: According to any one of the embodiments 1 to 3, the first control information further includes third indication information. The third indication information indicates a time unit range within which the sending module reports the measurement result. The sending module is specifically configured to report the measurement result to the first device within the time unit range.

Embodiment 5: According to the embodiment 4, the sending module is further configured to send second control information to the first device within the time unit range. The second control information includes an identifier of a first spatial receiver filter. The identifier of the first spatial receiver filter is used by the first device to receive the measurement result by using the first spatial receiver filter.

Embodiment 6: According to the embodiment 5, the identifier of the first spatial receiver filter is determined based on an identifier of a reference signal that is in the reference signals associated with the M pieces of first control information and that has reference signal received power greater than or equal to a preset threshold.

Embodiment 7: According to any one of the embodiments 1 to 6, the first control information further includes fourth indication information. The fourth indication information indicates a sequence number of a time unit, in the N time units, at which the first control information is sent.

Embodiment 8: According to any one of the embodiments 1 to 7, the identifier of the reference signal is determined based on the time interval indicated by the first indication information in the first control information associated with the reference signal.

Alternatively, the identifier of the reference signal is determined based on the time interval indicated by the first indication information in the first control information associated with the reference signal and a sequence number of a sub-time unit at which the reference signal is sent.

Alternatively, the identifier of the reference signal is determined based on the sequence number indicated by the fourth indication information in the first control information associated with the reference signal.

Alternatively, the identifier of the reference signal is determined based on the sequence number indicated by the fourth indication information in the first control information associated with the reference signal and a sequence number of a sub-time unit at which the reference signal is sent.

Embodiment 9: According to any one of the embodiments 1 to 8, the measurement result further includes fifth indication information. The fifth indication information indicates a quantity of unused spatial receiver filters in the receiving module.

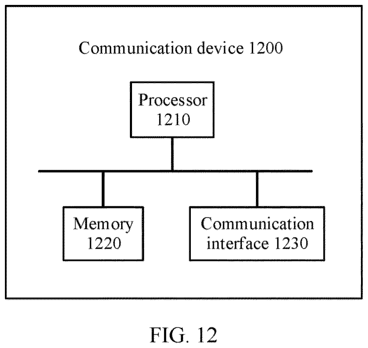

Embodiment 10: According to any one of the embodiments 1 to 9, the first control information further includes sixth indication information. The sixth indication information indicates whether the one or more reference signals in the reference signals associated with the first control information are sent by using a same spatial transmitter filter. An embodiment of this application provides a communication device 1200. FIG. 12 is a schematic block diagram of a communication device 1200 according to an embodiment of this application.

The communication device 1200 includes a processor 1210, a memory 1220, and a communication interface 1230.

The memory 1220 is configured to store executable instructions.

The processor 1210 is coupled to the memory 1220 via the communication interface 1230. The processor 1210 is configured to invoke and run the executable instructions in the memory 1220, to implement the method according to an embodiment of this application. The communication device may be the first device or the second device in an embodiment of this application.

The processor 1210 may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

Optionally, an embodiment of this application further provides a communication device. The communication device includes an input/output interface and a logic circuit. The input/output interface is configured to obtain input information and/or output information. The logic circuit is configured to perform the method according to any one of the method embodiments, and perform processing and/or generate output information based on the input information.

An embodiment of this application further provides a computer-readable storage medium. The computer-readable storage medium stores a computer program used to implement the method according to the method embodiment. When the computer program runs on a computer, the computer is enabled to implement the method according to the method embodiment.

An embodiment of this application further provides a computer program product. The computer program product includes computer program code. When the computer program code is run on a computer, the method according to the method embodiment is performed.

An embodiment of this application further provides a chip, including a processor. The processor is connected to a memory. The memory is configured to store a computer program. The processor is configured to execute the computer program stored in the memory, to enable the chip to perform the method according to the method embodiment.

It should be understood that the numbers "first", "second", and the like in embodiments of this application are merely used to distinguish between different objects, for example, to distinguish between different network devices, and do not constitute a limitation on the scope of embodiments of this application. Embodiments of this application are not limited thereto.

The term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" or "two or more". For example, at least one of A, B, and C may represent the following seventh cases:
Only A exists, only B exists, only C exists, both A and B exist, both A and C exist, and both C and B exist, and A, B, C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

A person skilled in the art may clearly learn that, for the purpose of convenient and brief description, for a specific working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. Abeam training method in sidelink, comprising:
sending, by a first device, N pieces of first control information to a second device respectively in N time units, wherein the first control information comprises first indication information, and the first indication information indicates a time interval between a time unit associated with the first control information and a time unit associated with a last piece of first control information, wherein N is a positive integer; and
receiving, by the first device, a measurement result reported by the second device, wherein the measurement result comprises second indication information, the second indication information indicates identifiers of one or more reference signals in reference signals associated with M pieces of first control information, and the N pieces of first control information comprise the M pieces of first control information, wherein M is a positive integer less than or equal to N.

2. The method according to claim 1, wherein
the reference signal associated with the first control information is a demodulation reference signal of the first control information, or the reference signal associated with the first control information is one or more reference signals scheduled via the first control information.

3. The method according to claim 1 or 2, wherein
the second indication information indicates the identifiers of the one or more reference signals in the reference signals associated with the M pieces of first control information and reference signal received power of the one or more reference signals.

4. The method according to any one of claims 1 to 3, wherein
the first control information further comprises third indication information, and the third indication information indicates a time unit range within which the second device reports the measurement result; and
the receiving, by the first device, a measurement result reported by the second device comprises: receiving, by the first device within the time unit range, the measurement result reported by the second device.

5. The method according to claim 4, wherein
before the receiving, by the first device within the time unit range, the measurement result reported by the second device, the method further comprises: receiving, by the first device, second control information within the time unit range, wherein the second control information comprises an identifier of a first spatial receiver filter, and the identifier of the first spatial receiver filter is used by the first device to receive the measurement result by using the first spatial receiver filter; and
the receiving, by the first device within the time unit range, the measurement result reported by the second device comprises:
receiving, by the first device within the time unit range, the measurement result by using the first spatial receiver filter.

6. The method according to claim 5, wherein
the identifier of the first spatial receiver filter is determined based on an identifier of a reference signal that is in the reference signals associated with the M pieces of first control information and that has reference signal received power greater than or equal to a preset threshold.

7. The method according to any one of claims 1 to 6, wherein
the first control information further comprises fourth indication information, and the fourth indication information indicates a sequence number of a time unit, in the N time units, at which the first control information is sent.

8. The method according to any one of claims 1 to 7, wherein
the identifier of the reference signal is determined based on the time interval indicated by the first indication information in the first control information associated with the reference signal;
the identifier of the reference signal is determined based on the time interval indicated by the first indication information in the first control information associated with the reference signal and a sequence number of a sub-time unit at which the reference signal is sent;
the identifier of the reference signal is determined based on the sequence number indicated by the fourth indication information in the first control information associated with the reference signal; or
the identifier of the reference signal is determined based on the sequence number indicated by the fourth indication information in the first control information associated with the reference signal and a sequence number of a sub-time unit at which the reference signal is sent.

9. The method according to any one of claims 1 to 8, wherein
the measurement result further comprises fifth indication information, and the fifth indication information indicates a quantity of unused spatial receiver filters in the second device.

10. The method according to any one of claims 1 to 9, wherein
the first control information further comprises sixth indication information, and the sixth indication information indicates whether the one or more reference signals in the reference signals associated with the first control information are sent by using a same spatial transmitter filter.

11. Abeam training method in sidelink, comprising:
receiving, by a second device, N pieces of first control information from a first device in N time units, wherein the first control information comprises first indication information, and the first indication information indicates a time interval between a time unit associated with the first control information and a time unit associated with a last piece of first control information, wherein N is a positive integer; and
reporting, by the second device, a measurement result to the first device, wherein the measurement result comprises second indication information, and the second indication information indicates identifiers of one or more reference signals in reference signals associated with M pieces of first control information, wherein M is a positive integer less than or equal to N.

12. The method according to claim 11, wherein
the reference signal associated with the first control information is a demodulation reference signal of the first control information, or the reference signal associated with the first control information is one or more reference signals scheduled via the first control information.

13. The method according to claim 11 or 12, wherein
the second indication information indicates the identifiers of the one or more reference signals in the reference signals associated with the M pieces of first control information and reference signal received power of the one or more reference signals.

14. The method according to any one of claims 11 to 13, wherein
the first control information further comprises third indication information, and the third indication information indicates a time unit range within which the second device reports the measurement result; and
the reporting, by the second device, a measurement result to the first device comprises: reporting, by the second device, the measurement result to the first device within the time unit range.

15. The method according to claim 14, wherein before the reporting, by the second device, the measurement result to the first device within the time unit range, the method further comprises:
sending, by the second device, second control information to the first device within the time unit range, wherein the second control information comprises an identifier of a first spatial receiver filter, and the identifier of the first spatial receiver filter is used by the first device to receive the measurement result by using the first spatial receiver filter.

16. The method according to claim 15, wherein
the identifier of the first spatial receiver filter is determined based on an identifier of a reference signal that is in the reference signals associated with the M pieces of first control information and that has reference signal received power greater than or equal to a preset threshold.

17. The method according to any one of claims 11 to 16, wherein
the first control information further comprises fourth indication information, and the fourth indication information indicates a sequence number of a time unit, in the N time units, at which the first control information is sent.

18. The method according to any one of claims 11 to 17, wherein
the identifier of the reference signal is determined based on the time interval indicated by the first indication information in the first control information associated with the reference signal;
the identifier of the reference signal is determined based on the time interval indicated by the first indication information in the first control information associated with the reference signal and a sequence number of a sub-time unit at which the reference signal is sent;
the identifier of the reference signal is determined based on the sequence number indicated by the fourth indication information in the first control information associated with the reference signal; or
the identifier of the reference signal is determined based on the sequence number indicated by the fourth indication information in the first control information associated with the reference signal and a sequence number of a sub-time unit at which the reference signal is sent.

19. The method according to any one of claims 11 to 18, wherein
the measurement result further comprises fifth indication information, and the fifth indication information indicates a quantity of unused spatial receiver filters in the second device.

20. The method according to any one of claims 11 to 19, wherein
the first control information further comprises sixth indication information, and the sixth indication information indicates whether the one or more reference signals in the reference signals associated with the first control information are sent by using a same spatial transmitter filter.

21. A communication device, comprising a processor and a memory, wherein the memory is configured to store a computer program, and the processor is configured to execute the computer program stored in the memory, to enable the communication device to perform the method according to any one of claims 1 to 20.

22. A communication device, comprising an input/output interface and a logic circuit, wherein
the input/output interface is configured to obtain input information and/or output information; and
the logic circuit is configured to perform the method according to any one of claims 1 to 20, and perform processing and/or generate the output information based on the input information.

23. A computer-readable storage medium, wherein
the computer-readable medium stores a computer program; and
when the computer program runs on a computer, the computer is enabled to perform the method according to any one of claims 1 to 20.

24. A computer program product, comprising a computer program, wherein when the computer program is executed, the method according to any one of claims 1 to 20 is implemented.
